Europäisches Patentamt

European Patent Office

Office européen des brevets

(11) Publication number: **0 239 336**
**A2**

## EUROPEAN PATENT APPLICATION

(21) Application number: 87302452.5

(22) Date of filing: 23.03.87

(51) Int. Cl.4: **B23B 31/16**

(30) Priority: 25.03.86 GB 8607422

(43) Date of publication of application:
30.09.87 Bulletin 87/40

(84) Designated Contracting States:
DE FR GB IT

(71) Applicant: **Pratt Burnerd International Limited
Park Works, Lister Lane
Halifax West Yorkshire HXI 5JH(GB)**

(72) Inventor: **Jackson, Joseph Fenwick
1 West Royd Villas
Halifax West Yorkshire(GB)**

(74) Representative: **Neill, Alastair William et al
Appleyard Lees & Co. 15 Clare Road
Halifax West Yorkshire HX1 2HY(GB)**

(54) **Chucks.**

(57) A chuck comprises a chuck body 10, rotatable about an axis, at least two carriers 28 movable towards and away from the axis, each carrier 28 having at least two jaws 32 mounted thereon. There are guide means 31 such that when the carriers move towards and away from the axis, the jaws 32 move towards and away from each other in directions extending radially of the axis, for use in gripping a workpiece. Each carrier 28 is mounted for pivotal movement about an axis extending parallel to the axis of the chuck body so that load applied to a workpiece by the jaws of each carrier is evenly distributed between the jaws.

EP 0 239 336 A2

## Chucks

The invention relates to chucks.

A large proportion of chucks for holding tools or workpieces on modern machine tools employ three jaws which are movable towards and away from one another in a radial direction with respect to the rotational axis of the chuck. However the forces exerted by the jaws on a workpiece can cause significant distortion of the workpiece.

Where the workpiece is a tube for example, the distortion or deflection of the walls of the tube can be calculated as follows, for a total gripping force of F distributed evenly between N equi-spaced jaws or grip points.

The following theory is based upon "Formulas for Stress and Strain" by Professor R.J. Roark, Fourth Edition, published by McGraw-Hill Book Company. Table VIII on page 174 gives, as Case 9, formulae on calculating inward deflection at load points and outward deflection between load points, where the outward force at each load point is W.

For chucks with conventional jaws which move radially inwardly to grip, the force $W = -\dfrac{F}{N}$ and $\theta = \dfrac{\pi}{N}$

radians where $\theta$ is half the angle between each pair of adjacent jaws. In other words, if there are three jaws, $\theta = 60°$.

Substituting these values in Professor Roark's equations,

$$\text{Deflection at load points} = \frac{FR^3}{4EIN}\left[\frac{1}{S^2}(\theta + 5C) - \frac{2}{\theta}\right]$$

$$\text{Deflection outward between load points} = \frac{FR^3}{4EIN}\left[\frac{2}{\theta} - \frac{1}{S} - \frac{\theta C}{S^2}\right]$$

where R is the radius of the tube
E is the modulus of elasticity
I is the moment of inertia of the tube cross section
S is sin $\theta$
C is Cos $\theta$

$$\text{If} \quad A = \frac{1}{N}\left[\frac{1}{S^2}(\theta + 5C) - \frac{2}{\theta}\right]$$

$$\text{and} \quad B = \frac{1}{N}\left[\frac{2}{\theta} - \frac{1}{S} - \frac{\theta C}{S^2}\right]$$

Then inward deflection at load points can be expressed

as $A \times \dfrac{FR^3}{4EI}$ and outward deflection

between load points can be expressed as $B \times \dfrac{FR^3}{4EI}$

and the total deflection or extent to which the tube walls are out of alignment can be expressed as:-

$$(A + B)\frac{FR^3}{4EI}$$

We have shown that for a typical component, these values are as follows for different values of N.

| N | A | B | (A + B) |
|---|---|---|---|
| 2 | 0.1488 | 0.1366 | 0.2854 |
| 3 | 0.0213 | 0.0190 | 0.0403 |
| 4 | 0.0061 | 0.0054 | 0.0115 |
| 5 | 0.0024 | 0.0021 | 0.0045 |
| 6 | 0.0011 | 0.0010 | 0.0021 |

Thus the total deflection for 3 grip points is $\dfrac{0.0403}{0.0021}$ greater than for 6 grip points which is equal to 19.19.

Thus if one utilised a six jaw chuck rather than a three jaw chuck, although the number of jaws has only been doubled, the amount of distortion of a workpiece can be reduced to about one twentieth.

However, considerable difficulties are experienced in evenly loading a workpiece when using more than three jaws. If two or three jaws are used, the load tends to distribute itself evenly but when four jaws are used for example, one jaw is, in a sense, redundant, and each jaw has to be positioned very accurately in relation to the other three jaws to ensure even load distribution. The problem is even more serious with numbers of jaws greater than four.

We have now developed a chuck which makes it possible to provide more than three contact points but without the problems associated with redundant loading.

The invention provides a chuck comprising a chuck body rotatable about an axis, at least two carriers movable towards and away from the axis, each carrier having at least two jaws mounted thereon, and guide means such that when the carriers move towards and away from the axis, the jaws move towards and away from each other in directions extending radially of the axis, for use in gripping a workpiece, each carrier being mounted for pivotal movement about an axis extending parallel to the axis of the chuck body so that load applied to a workpiece by the jaws of each carrier is evenly distributed between the jaws.

The guide means may comprise radially extending grooves in the chuck body in which the jaws are arranged to slide.

The grooves may each have a T-shaped cross section.

Each jaw may be slidably mounted on the associated carrier to accommodate the relative movement which will take place between the jaws of a carrier as the jaws move radially with respect to the axis of the chuck body.

Each carrier may comprise an arcuate member having a central pivot and a jaw mounted at each end.

The chuck body may comprise a cylinder, each carrier being mounted within the cylinder.

Preferably the cylinder contains a piston and the piston is connected to the carriers such that when the piston moves axially within the cylinder the carriers move radially.

The cylinder and piston may be substantially as described in our European Patent Specification No. 0102236.

By way of example, a specific embodiment of the invention will now be described, with reference to the accompanying drawings, in which:-

Figure 1 is a cross sectional view of an embodiment of chuck according to the invention, the cross section being taken along the rotational axis of the chuck body;

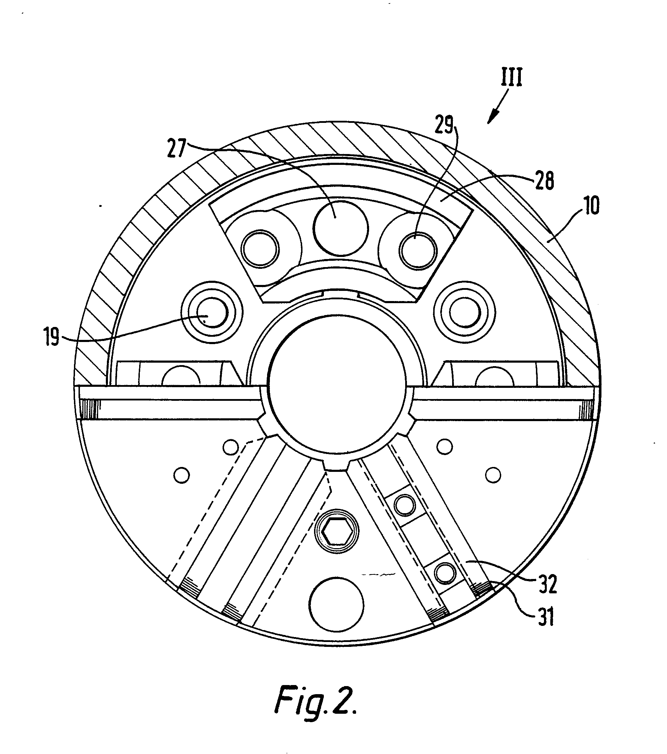

Figure 2 is a front view of the chuck, partly sectioned on line II-II of Figure 1;

Figure 3 is a view in the direction of arrow III of Figure 2;

Figure 4 is a scrap view on line IV-IV of Figure 1, showing one jaw at its maximum radially outward position and another jaw at its maximum radially inward position;

Figure 5 is a front view of one of the carriers of the chuck;

Figure 6 is a side view of the carrier shown in Figure 5;

Figure 7 is a plan view of the carrier, partially in section; and

Figure 8 is a cross sectional view on line VIII-VIII of Figure 5.

The chuck shown in the drawings comprises a cylindrical chuck body 10 which is constructed from a cylindrical member having a front face 11 and a cylindrical side wall 12, and a rear disc-like closure plate 13. These two components are bolted together, for example at 14.

The face 11 and plate 13 have projecting therefrom sleeves 15 and 16 which sealingly abut one another to define a passage 17 through the chuck through which elongate workpieces can be passed. Thus the interior of the chuck body has an annular working chamber 18. At three locations 19 around the chamber bolts pass right through the chuck body for use in mounting the chuck body on a machine tool spindle. The passages that receive the bolts are sealed off from the annular chamber 18 by sealing sleeves 20.

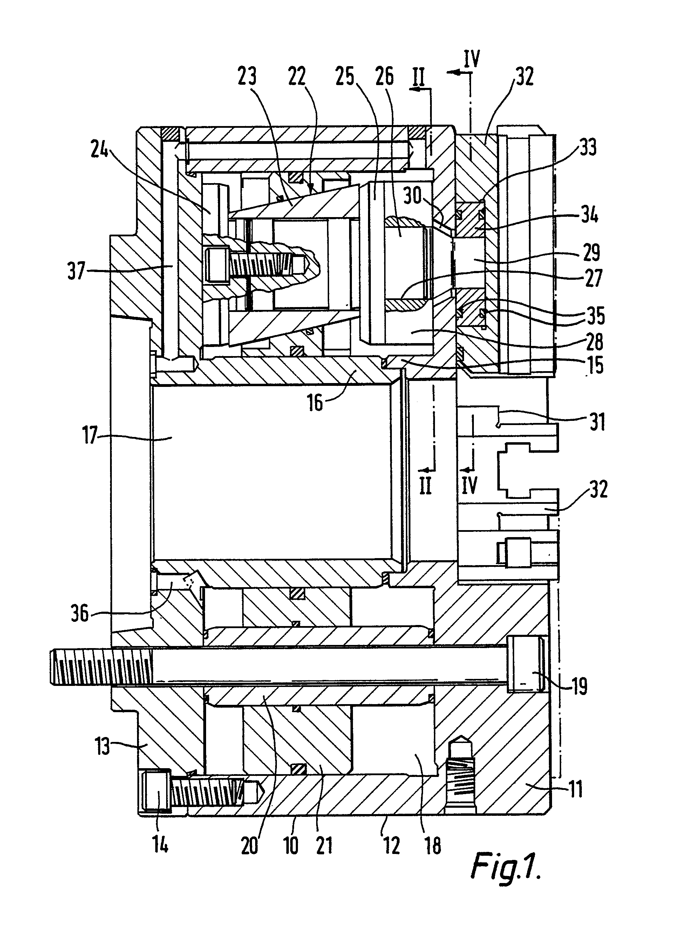

Within the chamber 18 there is an annular piston 21 and at three locations around the piston, one of which is clearly illustrated in Figure 1 at 22, there is a passageway through the piston in a direction which is inclined to the axis of rotation of the chuck body. Passing through this inclined passageway is a cylindrical cross section member 23 to the ends of which are secured plates 24 and 25. A spigot 26 projects forwardly from each plate 25.

As described so far, the chuck is substantially identical to the chuck described in our European Patent Specification No. 0102236. However in that chuck the spigot which is the equivalent of spigot 26 passed sealingly through the front face of the chuck and engaged with a conventional radially movable jaw. When the piston 21 was moved axially, the inclined faces of the passageway 22 had a wedge-like action on the inclined cylindrical member 23 such that the cylindrical member 23 and hence the spigot 26 moved radially, operating the jaws. The plate 25 abutted against the front face of the chuck so that the member 23 could not move axially. The plate 24 abutted the rear of the chuck in a similar manner to that shown in Figure 1.

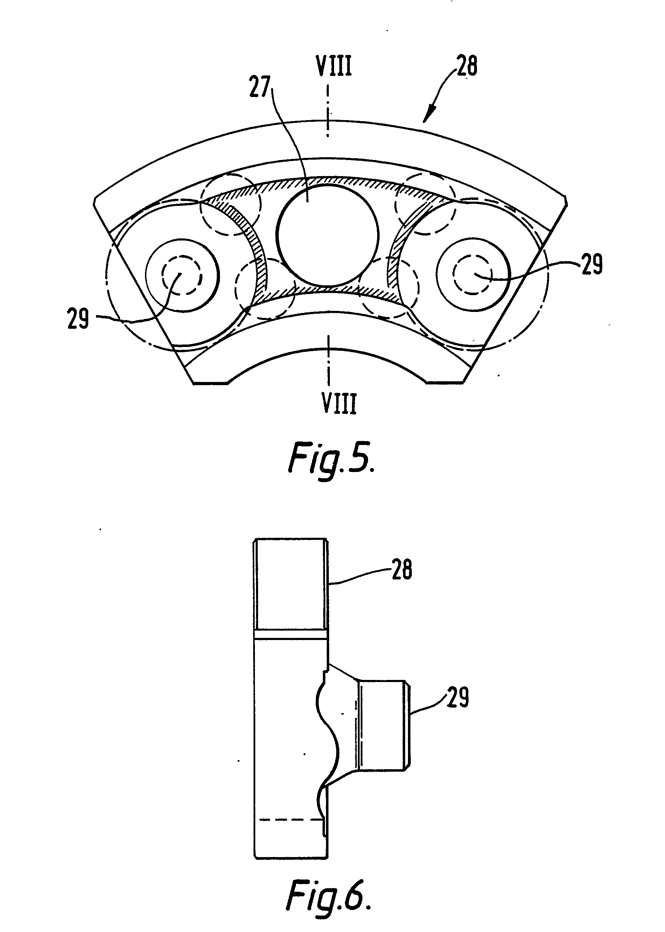

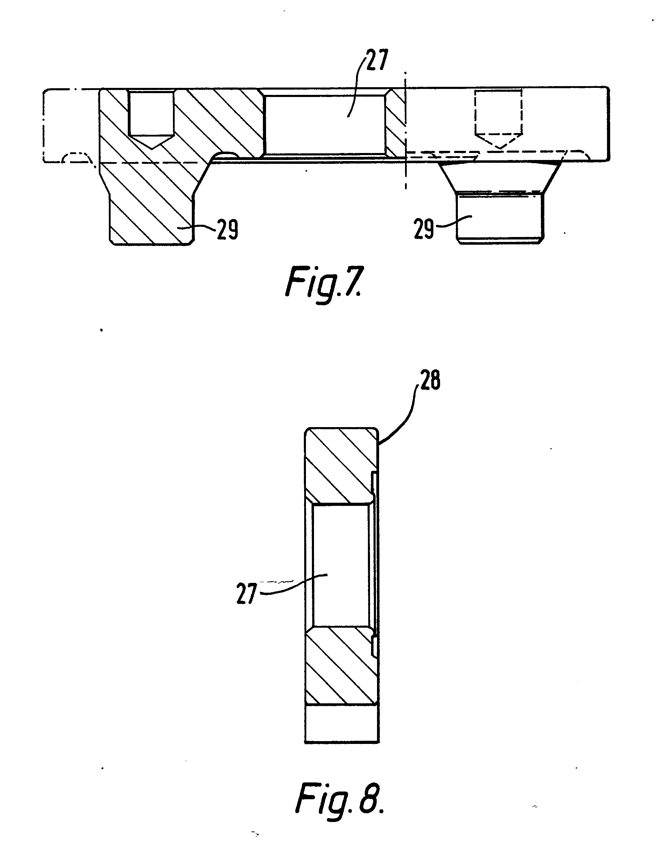

In this embodiment however, the spigot 26 itself does not pass through the front face of the chuck. Instead each spigot 26 of each of the three members 23 engages in an aperture 27 in a carrier member 28 which is shown in detail in Figures 5 to 8.

It will be seen that the carrier member 28 comprises an arcuate member, the hole 27 being positioned centrally. From each end of the arcuate member a spigot 29 projects.

These six spigots 29 project respectively through six apertures 30 in the front face of the chuck body. The six apertures open respectively into six T cross section slideways 31 extending radially of the chuck body. In each of these slideways there is slidably mounted a chuck base jaw 32, also of T-shaped cross section. Each base jaw 32 has a slot 33 in its rear face, the slot extending at right angles to the radial direction. Slidably mounted in this slot is a square block 34. Each face of the block is fitted with a ring seal 35. One seal 35 of each block forms a seal around the associated aperture 30 between the front face of the chuck and the block 34. The other seal of each block forms a seal between the block and the associated base jaw 32, thus effectively sealing each aperture 30 from atmosphere.

When the piston 21 moves axially, the spigots 26 move radially, and hence move the carriers 28 radially. This in turn causes the spigots 29 of each carrier to move radially, moving the base jaws radially. The apertures 30 give a sufficient clearance around the spigots 29 to accommodate the working movement of the base jaws.

When the base jaws are in use, top jaws will be mounted on the base jaws in a conventional manner.

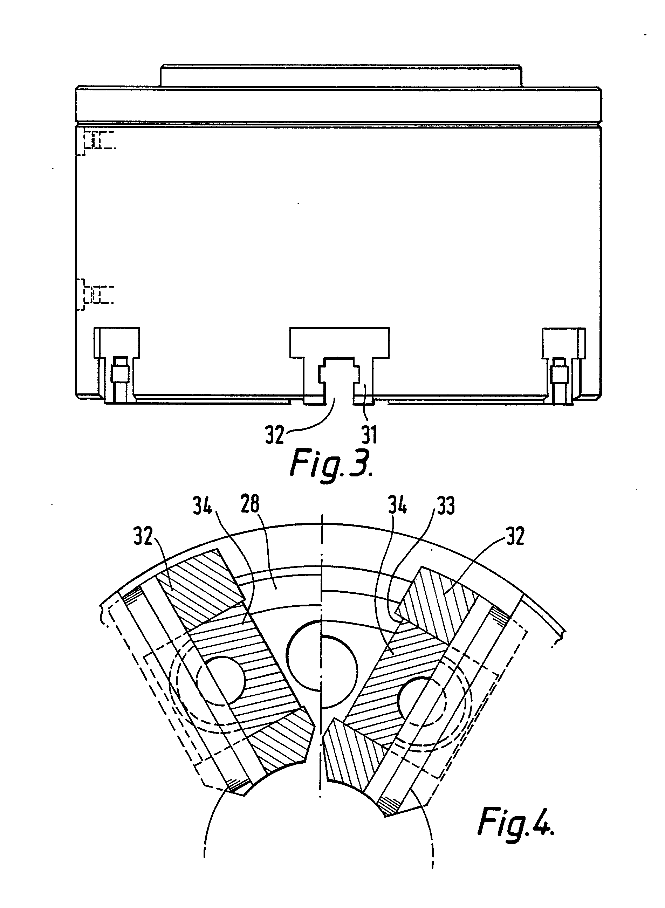

Figure 4 shows the limits of the working movement of the top jaws 32. The left-hand portion of Figure 4 shows a jaw 32 at its maximum radially outward position, and the right-hand side of the Figure shows a jaw 32 at its maximum radially inward position.

If the base jaws 32 were mounted on the carriers 28 with no provision for relative movement in a direction at right angles to the radial direction, the jaws would tend to jam since it will be apparent that the jaws must move towards one another in a direction perpendicular to the radial direction, as they move in the radially inward direction. It is for this reason that the blocks 34 are provided. As the jaws move towards and away from one another in a direction perpendicular to the radial direction, the blocks 34 slide relatively in the slots 33. The extent of sliding movement that takes place can also be seen in Figure 4.

To move the piston 21 to the right as viewed in Figure 1, pressurised fluid is applied via a passage 36. To move the piston to the left, pressurised fluid is applied via a passage 37.

Because the carriers 28 are connected to the spigots 26 by the central pivot hole 27, each carrier is free to rock about the associated spigot 26. Thus the load which is applied by each pair of jaws carried by each carrier is automatically adjusted evenly between the two jaws. Thus each workpiece has six grip points, and the potential total distortion of the workpiece is approximately one-twentieth of the distortion that would be produced with three jaws. However there is no problem of redundant loading since each pair of jaws acts like a single jaw from the point of view of evenly distributing the load.

The invention is not restricted to the details of the foregoing embodiment. For example the carriers 28 need not be moved using a mechanism similar to that described in our European Patent Specification No. 0102236. Any drive means may be used, including manual drive means.

Although six jaws are utilised in this embodiment, mounted on three carriers, other numbers of jaws and carriers may be used. For example four jaws might be used, mounted in pairs on two carriers.

## Claims

1. A chuck comprising a chuck body rotatable about an axis, at least two carriers movable towards and away from the axis, each carrier having at least two jaws mounted thereon, and guide means such that when the carriers move towards and away from the axis, the jaws move towards and away from each other in directions extending radially of the axis, for use in gripping a workpiece, each carrier being mounted for pivotal movement about an axis extending parallel to the axis of the chuck body so that load applied to the workpiece by the jaws of each carrier is evenly distributed between the jaws.

2. A chuck as claimed in Claim 1, in which the guide means comprise radially extending grooves in the chuck body in which the jaws are arranged to slide.

3. A chuck as claimed in Claim 2, in which the grooves each have a T-shaped cross section.

4. A chuck as claimed in any aone of Claims 1 to 3 in which each jaw is slidably mounted on the associated carrier to accommodate the relative movement which will take place between the jaws of a carrier as the jaws move radially with respect to the axis of the chuck body.

5. A chuck as claimed in any one of the preceding claims, in which each carrier comprises an arcuate member having a central pivot and a jaw mounted at each end.

6. A chuck as claimed in any one of claims 1 to 5 in which the chuck body comprises a cylinder, each carrier being mounted within the cylinder.

7. A chuck as claimed in Claim 6, in which the cylinder contains a piston and the piston is connected to the carriers such that when the piston moves axially within the cylinder the carriers move radially.

0 239 336

Fig.1.

Fig.2.

**Fig.3.**

32    31

34    28              34    33

32                              32

**Fig.4.**

Fig.5.

Fig.6.

Fig.7.

Fig. 8.